# FASCICULE DE BREVET EUROPEEN

(11) **EP 3 356 209 B1**
(45) Date de publication et mention de la délivrance du brevet: **27.11.2019**
(21) Numéro de dépôt: 16788155.6
(22) Date de dépôt: 29.09.2016
(51) Int. Cl.: F15D 1/00, B62D 37/02

(54) **SYSTÈME AÉRODYNAMIQUE À GÉNÉRATEUR DE VORTEX ALIMENTÉ PAR DES GAZ D'ÉCHAPPEMENT**
AERODYNAMISCHES SYSTEM MIT EINEM VON ABGASEN GESPEISTEN WIRBELGENERATOR
AERODYNAMIC SYSTEM COMPRISING A VORTEX GENERATOR SUPPLIED BY EXHAUST GASES

(30) Priorité: 30.09.2015 FR 1559265
(43) Date de publication de la demande: 08.08.2018
(73) Titulaire: Compagnie Plastic Omnium, 69007 Lyon (FR)
(72) Inventeur: GILOTTE, Philippe, 01470 Benonces (FR); EULALIE, Yoann, 69006 Lyon (FR)
(74) Mandataire: LLR
(86) Numéro de dépôt international: PCT/FR2016/052491
(87) Numéro de publication internationale: WO 2017/055757

(56) Documents cités:
- WO-A1-88/09737
- WO-A1-2008/135967
- DE-A1- 19 633 205
- FR-A1- 2 930 229

## Description

La présente invention concerne un système aérodynamique pour véhicule automobile.

Les véhicules automobiles en mouvement sont soumis à différents efforts qui s'opposent à leur avancement. Ces efforts sont en particulier les forces de frottements solides, au contact des roues avec le sol, et les forces aérodynamiques, dues pour partie, aux frottements de l'air sur les parois de la carrosserie du véhicule, et pour une autre partie, au valeur de pression exercées principalement à l'avant et à l'arrière du véhicule.

A haute vitesse, ces forces aérodynamiques deviennent dominantes par rapport aux autres et jouent un rôle important sur la consommation énergétique du véhicule. Une partie des forces aérodynamiques est générée par les dépressions créées par les décollements, les recirculations et les tourbillons longitudinaux de l'air à l'arrière du véhicule.

C'est pour cette raison que les véhicules automobiles sont généralement équipés de systèmes aérodynamiques visant à faciliter l'écoulement de l'air près des pièces de carrosserie du véhicule, plus précisément à éviter les turbulences qui engendrent une déperdition d'énergie et donc, une augmentation de la consommation d'énergie du véhicule.

On sait que ces turbulences peuvent être générées dans des régions de décollement marquées par des ruptures d'incidence de pièces de carrosserie du véhicule. Ces ruptures, également appelées bords de fuite ou ligne de décollement, correspondent à des ruptures de forme de la pièce (changement de galbe, forme en saillie, fin de pièce) qui conduisent à des ruptures d'incidence de l'écoulement d'air par rapport à la paroi. Ces régions de décollement génèrent, en aval, des zones tourbillonnaires dans lesquelles une dépression se crée lorsque le véhicule roule. Cette zone tourbillonnaire comprend une couche de cisaillement et un tourbillon principal de retour.

De telles zones se trouvent notamment en partie basse du parechoc arrière (au centre et/ou au niveau des crosses latérales de parechoc arrière).

Pour améliorer l'écoulement d'air dans ces zones tourbillonnaires en partie basse du parechoc arrière, on peut chercher à affiner ou prolonger ces bords de fuite, en adaptant la forme de la pièce de carrosserie. Les systèmes classiques sont essentiellement constitués par des déflecteurs placés dans ces zones à l'arrière du véhicule.

Toutefois, de telles pièces ne font pas disparaître totalement les turbulences, et sont relativement contraignantes du point de vue esthétique. De plus, en partie basse du parechoc arrière, un déflecteur offre une efficacité limitée du fait que, contrairement à la partie arrière haute du véhicule, la dimension vers l'arrière du véhicule (selon l'axe X du véhicule) du déflecteur est limitée en partie basse.

On connaît également, du document EP1740442B par exemple, des dispositifs aérodynamiques qui sont constitués par une ou plusieurs ailettes formant au moins un générateur de vortex et généralement disposées en amont d'une ligne de décollement d'un élément de la carrosserie du véhicule automobile. Ces ailettes sont le plus souvent déplaçables entre une position escamotée et une position en saillie dans laquelle elles agissent sur les structures tourbillonnaires générées autour des éléments de carrosserie du véhicule.

Cependant, de tels dispositifs se heurtent à des problèmes d'encombrement, d'aspect et d'intégration sur les éléments de carrosserie. Par exemple, les ailettes doivent impérativement être escamotées dans certaines conditions, ce qui impose des solutions techniques complexes de mobilité des ailettes.

De plus, il n'existe pas réellement de couche limite inférieure amont de décollement en partie basse, contrairement à la partie haute. De ce fait, l'utilisation en partie basse de ce type de système, dédié à la partie haute, offre une efficacité limitée.

On connaît également, du document EP 1 873 044 par exemple, un système aérodynamique pour limiter les pertes dans la couche de cisaillement, sans pour autant imposer de formes spéciales aux pièces de carrosserie. Un tel système comprend des moyens électromécaniques agencés au voisinage d'une région de décollement du véhicule. Ces moyens sont aptes à transformer de l'électricité en ondes de pression permettant la création d'un jet d'air. Ce jet permet la réduction des structures produites dans la couche de cisaillement et de diminuer l'intensité du tourbillon produit en aval.
Le document WO 88/09737 A1 décrit un système comportant un dispositif d'aspiration au niveau de la surface aérodynamique d'une véhicule. Ce système comporte des orifices qui coopèrent avec un conduit d'aspiration relié à la ligne d'échappement du véhicule, de façon à aspirer l'air depuis la couche limite vers le conduit d'échappement.

Cependant, une telle solution nécessite un positionnement très précis pour être efficace, et s'adapte difficilement à différents types de véhicules et/ou à différentes vitesses de roulage du véhicule.

De plus, cette solution, tout comme la solution basée sur la génération de vortex nécessite un apport d'énergie.

L'invention a pour but de remédier à ces inconvénients en fournissant un système aérodynamique plus efficace pour la partie basse arrière, ne nécessitant pas un apport énergétique supplémentaire sur le véhicule, et sans pour autant imposer de formes spéciales aux pièces de carrosserie.

Ainsi, l'objet de l'invention concerne un système aérodynamique pour véhicule automobile apte à être disposé à proximité d'au moins une région de décollement d'au moins un élément de carrosserie d'un véhicule. Le système comporte au moins un générateur de vortex par création de jet d'air périodique, alimenté par des gaz d'échappement issus d'une sortie de ligne d'échappement du véhicule.

Le système peut en outre comporter l'une ou plusieurs des caractéristiques suivantes, prises seules ou en combinaison :
- le générateur de vortex est un organe passif ;
- le générateur de vortex est composé de pièces statiques ;
- le générateur de vortex est un oscillateur fluidique ;
- le générateur de vortex est alimenté par les gaz d'échappement au moyen d'un distributeur de gaz d'échappement adapté à être relié à la sortie de la ligne d'échappement dudit véhicule ;
- le distributeur de gaz d'échappement comporte un moyen de connexion à la ligne d'échappement, et un organe tubulaire sensiblement perpendiculaire à la ligne d'échappement une fois relié à ladite ligne, l'organe tubulaire permettant de distribuer sur une partie au moins de la largeur du véhicule les gaz d'échappement issu de 1a ligne d'échappement du véhicule ;
- l'organe tubulaire est dimensionné pour servir de silencieux de pot d'échappement ;
- le générateur de vortex est orienté de façon à diriger le jet d'air périodique vers la région de décollement ;
- la région de décollement génère une couche de cisaillement, et ledit générateur de vortex est orienté de façon à diriger le jet d'air périodique dans ou en direction de la couche de cisaillement ;
- le jet d'air périodique génère des tourbillons, et ledit générateur de vortex est orienté de façon à ce que les tourbillons se déplacent selon une direction prédéfinie vers la couche de cisaillement, de façon à propager les tourbillons dans ou vers la couche de cisaillement ;
- le système comporte un système de contournement permettant d'évacuer les gaz de la ligne d'échappement sans passer par le générateur de vortex ;
- le système comporte au moins une ouverture adaptée à entrainer l'air de soubassement par un effet venturi ;
- l'élément de carrosserie est un parechoc arrière.

L'invention concerne également un véhicule automobile équipé d'un système aérodynamique selon l'invention.

L'invention sera mieux comprise à la lecture des figures annexées, qui sont fournies à titre d'exemples et ne présentent aucun caractère limitatif, dans lesquelles :
La figure 1 est un schéma illustrant l'arrière d'un véhicule automobile, équipé d'un système aérodynamique selon un mode de réalisation de l'invention.
La figure 2 est un détail de la figure 1, illustrant plus précisément le système aérodynamique.
La figure 3 est un schéma illustrant l'arrière d'un véhicule automobile, équipé d'un système aérodynamique selon un autre mode de réalisation de l'invention.
La figure 4 est un détail de la figure 1, illustrant plus précisément le système aérodynamique.
La figure 5 illustre une géométrie d'oscillateur fluidique utilisé dans un exemple de réalisation.

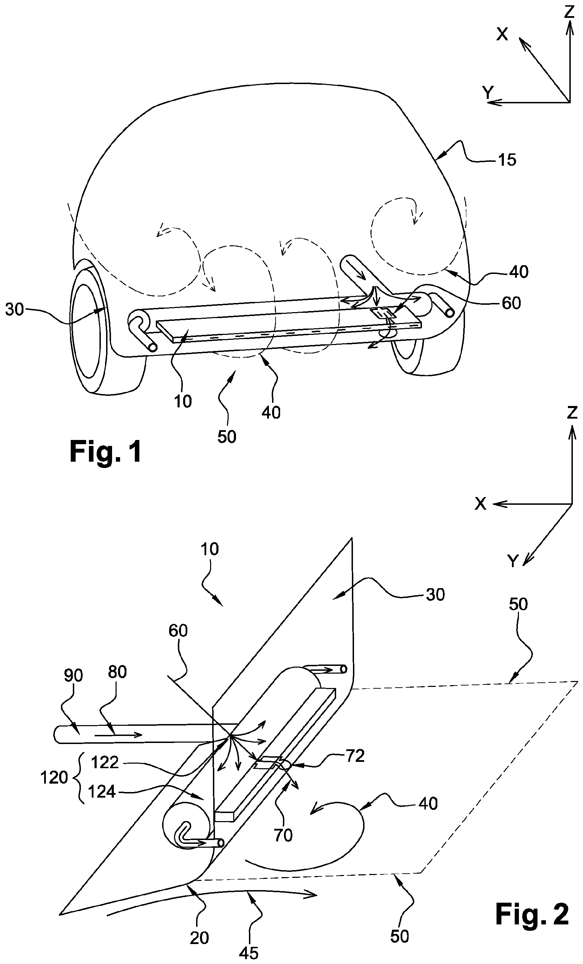

On se réfère maintenant à la figure 1, qui illustre l'arrière d'un véhicule automobile (15), équipé d'un système aérodynamique (10) selon un mode de réalisation de l'invention, et à la figure 2 qui illustre en détail ce système aérodynamique (10) pour véhicule automobile (15), ainsi que son fonctionnement.

Ce système aérodynamique (10) est apte à être disposé à proximité (en aval ou en amont) d'au moins une région de décollement (20) d'au moins un élément de carrosserie (30) d'un véhicule. Sur l'exemple des figures 1 à 4, il s'agît d'un parechoc arrière de véhicule.

La région de décollement (20) génère en aval (dans le sens de l'écoulement d'air, c'est-à-dire de l'avant du véhicule vers l'arrière du véhicule) une couche de cisaillement (50). Cette couche de cisaillement (50) constitue une interface entre deux zones dans lesquelles l'air circule avec des vitesses différentes :
- une zone tourbillonnaire (40), à l'arrière du véhicule, dans laquelle l'air circule lentement et crée une dépression d'air ;
- une zone de circulation de l'air de soubassement (45) ou de l'air latéral sur les bords de la pièce de carrosserie (30), dans laquelle l'air circule plus rapidement.

La couche de cisaillement (50) est donc en périphérie de la zone de tourbillonnaire (40).

Le système aérodynamique (10) comporte au moins un générateur de vortex (60) par création de jet d'air périodique (70) alimenté par des gaz d'échappement (80) issus de la sortie de ligne d'échappement (90) du véhicule.

On entend par « jets d'air périodiques » un ensemble de jets qui sont générés avec une ou plusieurs fréquences données, et/ou un jet dont la vitesse et la direction peuvent varier selon leurs propres fréquences.

Autour de tels jets d'air, sont générés des tourbillons (72) se déplaçant le long du jet d'air (70).

La création d'un jet d'air périodique peut se faire par soufflage uniquement, par aspiration uniquement, par soufflage et aspiration, ou par oscillation, c'est-à-dire par variation de l'angle d'orientation d'une buse (on parle de buse oscillante autour d'une position donnée). Ainsi, le générateur de vortex (60) est adapté à créer périodiquement un jet d'air, en réalisant une succession de soufflage, ou d'aspiration, ou une combinaison périodique de soufflage et d'aspiration.

On peut utiliser différent types de générateur de vortex : un oscillateur fluidique, un générateur de jet synthétique généré avec une membrane à effet piézoélectrique, électromagnétique, ou électrostatique...

Selon un mode de réalisation préféré, le générateur de vortex (60) est un organe passif, c'est-à-dire qu'il transforme, sans apport d'énergie, les gaz d'échappement (80) issus de la sortie de la ligne d'échappement (90) en jets d'air périodiques. Le générateur de vortex (60) se sert du débit et de la pression des gaz d'échappement (80) pour générer les tourbillons.

Afin de réduire les nuisances sonores, non seulement du générateur de vortex (60), mais également de la sortie des gaz d'échappement, on utilise de préférence un générateur de vortex (60) composé uniquement de pièces statiques. En effet, des pièces mobiles, même dans un organe passif, génèrent un bruit qu'il peut être avantageux de réduire.

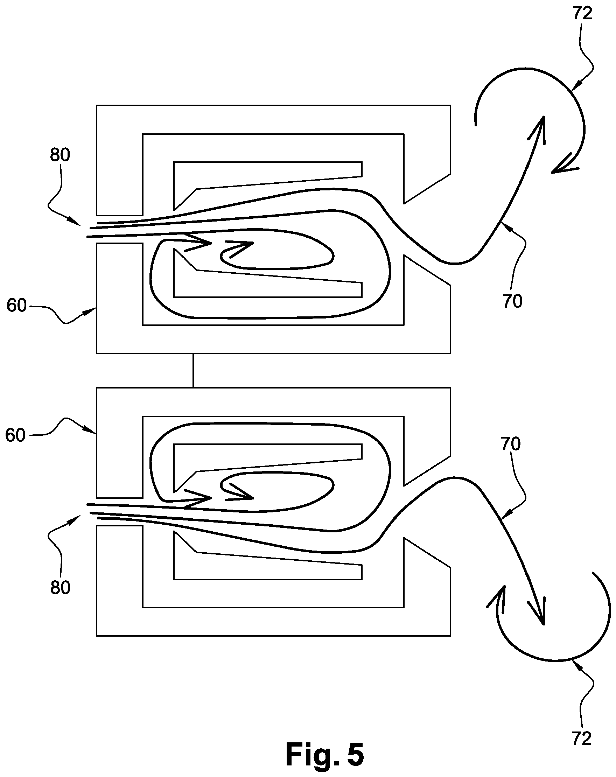

Selon un mode de réalisation, le générateur de vortex (60) comporte au moins un oscillateur fluidique permettant de générer un jet d'air périodique. On appelle oscillateur fluidique un organe comportant une chambre d'oscillation, une entrée d'air dans la chambre, et une sortie d'air de la chambre. L'air sortant de la chambre d'oscillation est un jet périodique de période donnée, ayant également un débit donné et une vitesse donnée. L'orientation du jet en sortie de l'oscillateur est variable en fonction du temps, comme l'illustre la figure 5. La chambre d'oscillation comporte diverses parois aptes à faire osciller le jet d'air entrant, par rebonds. Des exemples de tels systèmes sont décrits par exemple dans le document suivant :
B. C. Bobusch et al. 2013 "Experimental study of the internal flow structures inside a fluidic oscillator", Experiment in fluids, June 2013.

Un exemple de géométrie des parois de la chambre d'oscillation d'un oscillateur fluidique est illustré sur la figure 5. La figure du haut illustre le flux d'air de l'oscillateur à un instant t1, et la figure du bas illustre le flux d'air de cet oscillateur à un autre instant t2.

Les dimensions et la géométrie de l'oscillateur fluidique sont définies en fonction de divers paramètres :
- l'espace disponible en sortie de la ligne d'échappement ;
- la vitesse du jet d'air périodique ;
- la fréquence du jet d'air périodique ;
- le débit, la pression, la température et la vitesse des gaz d'échappement.

La vitesse et la fréquence des jets d'air sont définies préalablement, par essai-erreur ou de préférence par modélisation. Leurs valeurs sont choisies afin d'augmenter au maximum la pression dans la zone tourbillonnaire (40) de la région de décollement (20).

Selon un mode de réalisation, le générateur de vortex (60) est alimenté par les gaz d'échappement au moyen d'un distributeur (120) de gaz d'échappement. Un tel distributeur (120) est adapté à être relié à la sortie de la ligne d'échappement (90) du véhicule de façon connu des spécialistes. Les gaz issus de la ligne d'échappement (90) sont ainsi intégralement collectés dans le distributeur (120).

Selon l'exemple de la figure 2, le distributeur (120) de gaz d'échappement comporte à cette fin un moyen de connexion (122) à la ligne d'échappement (90), et de préférence, un organe tubulaire (124) sensiblement perpendiculaire à la ligne d'échappement (90) une fois relié à ladite ligne (cet organe est ainsi orienté selon l'axe Y du véhicule). Cet organe tubulaire (124) permet de distribuer sur une partie au moins de la largeur du véhicule les gaz d'échappement (80) issu de la ligne d'échappement du véhicule (90).

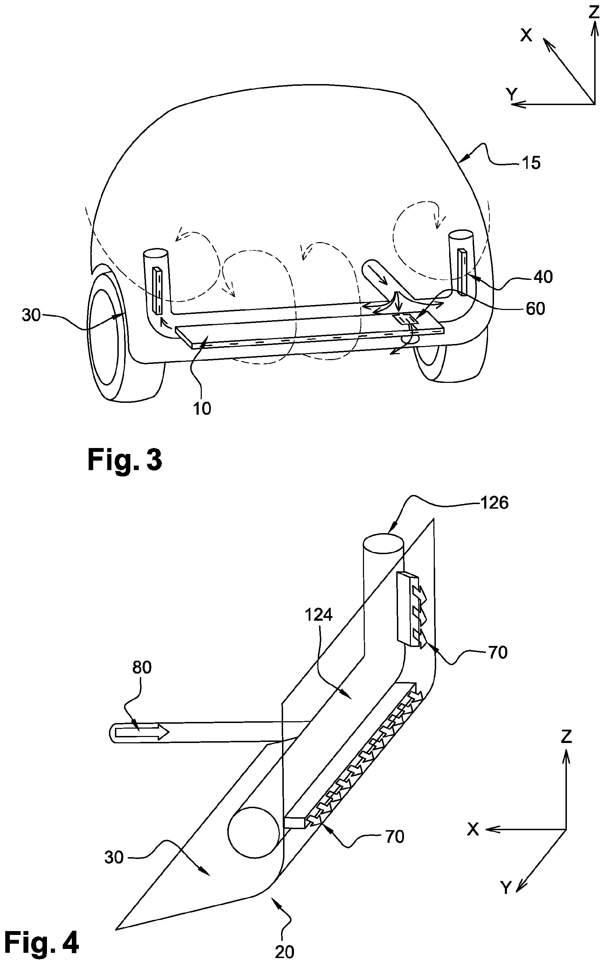

Comme illustré sur les figures 3 et 4, cet organe tubulaire (124) peut également comporter à chaque extrémité un tube (126) orienté verticalement (selon l'axe Z du véhicule). Ces tubes verticaux (126) permettent de distribuer verticalement les gaz d'échappement sur les parties latérales du véhicule (au niveau des crosses de parechoc arrière).

L'organe tubulaire (124) connecté aux générateurs de vortex (60) peut dans certaines applications être dimensionné pour réduire le bruit d'échappement et dans ce cas remplacer le silencieux de pot d'échappement.

Selon l'invention il est possible d'accroitre le débit des jets oscillant en utilisant une ouverture dans la ligne d'échappement et/ou dans le distributeur (120), venant entrainer l'air de soubassement (45) par un effet venturi produit par le débit des gaz d'échappement. Cette ouverture peut être placée en aval ou en amont des oscillateurs fluidiques. Selon un exemple (ouverture placée en amont), la ligne d'échappement peut comporter une ouverture, permettant à l'air de soubassement d'être aspiré puis entrainé par les gaz d'échappement à l'intérieur de la ligne d'échappement, puis dans le distributeur (120). Selon un exemple (ouverture placée en aval), l'air de soubassement est entrainé par les jets d'air périodiques.

Afin de réduire davantage les nuisances sonores, on utilise de préférence dans l'oscillateur fluidique des formes de parois sans arrête vive.

Pour certains points de fonctionnement du véhicule, on peut conserver une canule et créer un système de contournement (bypass), par exemple avec une vanne papillon, si la contre pression générée par l'oscillateur est trop forte. La vanne est pilotée de façon active par le contrôleur du véhicule. Ce contournement permet de renvoyer les gaz issus de la ligne d'échappement directement à l'arrière du véhicule sans passer par les oscillateurs. Ce contournement peut aussi servir à réduire la vitesse des gaz de sortie ou la fréquence d'oscillation à un régime moteur plus élevé.

Ce contournement permet également au système de générer des jets d'air avec au moins deux fréquences différentes. L'une en utilisant directement le débit d'air issu de la ligne d'échappement modulée par les générateurs de vortex fluidique (60) ; l'autre en actionnant la vanne papillon du système de contournement, afin de créer une contre pression fluctuante, remontant dans le distributeur (120) pulsant le débit à l'entrée des générateurs de vortex (60)

Selon un mode de réalisation, le système aérodynamique (10) peut être orienté dans une direction donnée, éventuellement réglable en fonction des conditions de roulage, de façon à diriger les jets d'air périodiques (70) en direction de la région de décollement (20).

De façon préférée, le système aérodynamique (10) peut être orienté de façon à diriger les jets d'air périodiques (70) dans, ou en direction de, la couche de cisaillement (50). Chaque jet d'air périodique (70) dirigé vers l'arrière du véhicule, génère des tourbillons (72), et le générateur de vortex (60) est orienté de façon à ce que les tourbillons (72) se déplacent selon une direction prédéfinie vers la couche de cisaillement (50), de façon à propager les tourbillons dans ou vers la couche de cisaillement (50).

## Revendications

1. Système aérodynamique (10) pour véhicule automobile apte à être disposé à proximité d'au moins une région de décollement (20) d'au moins un élément de carrosserie (30) d'un véhicule, **caractérisé en ce que** le système comporte au moins un générateur de vortex (60) par création de jet d'air périodique (70) alimenté par des gaz d'échappement (80) issus d'une sortie de ligne d'échappement (90) du véhicule.

2. Système selon la revendication 1, dans lequel le générateur de vortex (60) est un organe passif.

3. Système selon la revendication 2, dans lequel le générateur de vortex (60) est composé de pièces statiques.

4. Système selon la revendication 3, dans lequel le générateur de vortex (60) est un oscillateur fluidique.

5. Système l'une des revendications précédentes, dans lequel le générateur de vortex (60) est alimenté par les gaz d'échappement (80) au moyen d'un distributeur (120) de gaz d'échappement adapté à être relié à la sortie de la ligne d'échappement (90) dudit véhicule.

6. Système selon la revendication 5, dans lequel ledit distributeur (120) de gaz d'échappement comporte un moyen de connexion (122) à la ligne d'échappement, et un organe tubulaire (124) sensiblement perpendiculaire à la ligne d'échappement (90) une fois relié à ladite ligne, l'organe tubulaire (124) permettant de distribuer sur une partie au moins de la largeur du véhicule les gaz d'échappement issu de la ligne d'échappement (90) du véhicule.

7. Système selon la revendication 6, dans lequel l'organe tubulaire (124) est dimensionné pour servir de silencieux de pot d'échappement.

8. Système selon l'une des revendications précédentes, dans lequel ledit générateur de vortex (60) est orienté de façon à diriger le jet d'air périodique (70) vers la région de décollement (20).

9. Système selon la revendication 8, dans lequel la région de décollement (20) génère une couche de cisaillement (50), et ledit générateur de vortex (60) est orienté de façon à diriger le jet d'air périodique (70) dans ou en direction de la couche de cisaillement (50).

10. Système selon la revendication 9, dans lequel le jet d'air périodique (70) génère des tourbillons (72), et ledit générateur de vortex (60) est orienté de façon à ce que les tourbillons (72) se déplacent selon une direction prédéfinie vers la couche de cisaillement (50), de façon à propager les tourbillons dans ou vers la couche de cisaillement (50).

11. Système selon l'une des revendications précédentes, comportant un système de contournement permettant d'évacuer les gaz (80) de la ligne d'échappement (90) sans passer par le générateur de vortex (60).

12. Système selon l'une des revendications précédentes, comportant au moins une ouverture adaptée à entrainer l'air de soubassement par un effet venturi.

13. Système selon l'une des revendications précédentes, dans lequel l'élément de carrosserie (30) est un parechoc arrière.

14. Véhicule automobile équipé d'un système aérodynamique (10) selon l'une des revendications précédentes.

## Patentansprüche

1. Aerodynamisches System (10) für Kraftfahrzeuge, das geeignet ist, um in der Nähe mindestens einer Ablösungsregion (20) mindestens eines Karosserieelements (30) eines Fahrzeugs angeordnet zu sein, **dadurch gekennzeichnet, dass** das System mindestens eine Vorrichtung (60) zum Generieren von Wirbeln durch das Schaffen eines periodischen Luftstrahls (70), der durch Abgase (80) gespeist wird, die aus einem Ausgang einer Abgasleitung (90) des Fahrzeugs stammen, umfasst.

2. System nach Anspruch 1, wobei der Wirbelgenerator (60) ein passives Organ ist.

3. System nach Anspruch 2, wobei der Wirbelgenerator (60) aus statischen Teilen besteht.

4. System nach Anspruch 3, wobei der Wirbelgenerator (60) ein fluidischer Oszillator ist.

5. System nach einem der vorhergehenden Ansprüche, wobei der Wirbelgenerator (60) durch die Abgase (80) anhand eines Abgasverteilers (120) gespeist wird, der geeignet ist, um mit dem Ausgang der Abgasleitung (90) des Fahrzeugs verbunden zu sein.

6. System nach Anspruch 5, wobei der Abgasverteiler (120) ein Mittel (122) zur Verbindung mit der Abgasleitung und ein röhrenförmiges Organ (124), das im Wesentlichen rechtwinklig zu der Abgasleitung (90) steht, nachdem es mit der Leitung verbunden wurde, umfasst, wobei es das röhrenförmige Organ (124) ermöglicht, mindestens auf einen Teil der Breite des Fahrzeugs die Abgase zu verteilen, die aus der Abgasleitung (90) des Fahrzeugs stammen.

7. System nach Anspruch 6, wobei das röhrenförmige Organ (124) dimensioniert ist, um als Schalldämpfer zu dienen.

8. System nach einem der vorhergehenden Ansprüche, wobei der Wirbelgenerator (60) derart orientiert ist, dass er den periodischen Luftstrahl (70) auf die Ablösungsregion (20) richtet.

9. System nach Anspruch 8, wobei die Ablösungsregion (20) eine Scherschicht (50) generiert, und der Wirbelgenerator (60) derart orientiert ist, dass er den periodischen Luftstrahl (70) in der oder in Richtung auf die Scherschicht (50) richtet.

10. System nach Anspruch 9, wobei der periodische Luftstrahl (70) Wirbel (72) generiert, und der Wirbelgenerator (60) derart orientiert ist, dass sich die Wirbel (72) in einer vordefinierten Richtung auf die Scherschicht (50) zu bewegen, um die Wirbel in der oder in Richtung auf die Scherschicht (50) zu verbreiten.

11. System nach einem der vorhergehenden Ansprüche, umfassend ein Umgehungssystem, das es ermöglicht, die Gase (80) der Abgasleitung (90) abzuleiten, ohne über den Wirbelgenerator (60) zu gehen.

12. System nach einem der vorhergehenden Ansprüche, umfassend mindestens eine Öffnung, die geeignet ist, um die Luft der Wagenunterseite durch einen Venturi-Effekt mitzunehmen.

13. System nach einem der vorhergehenden Ansprüche, wobei das Karosserieelement (30) eine hintere Stoßstange ist.

14. Kraftfahrzeug, das mit einem aerodynamischen System (10) nach einem der vorhergehenden Ansprüche ausgestattet ist.

## Claims

1. Aerodynamic system (10) for a motor vehicle, which can be arranged close to at least one region of detachment (20) of at least one bodywork element (30) of a vehicle, **characterised in that** the system comprises at least one vortex generator (60) which generates a vortex by creating a periodic air jet (70) and is supplied by exhaust gases (80) from an outlet of the exhaust line (90) of the vehicle.

2. System according to claim 1, wherein the vortex generator (60) is a passive member.

3. System according to claim 2, wherein the vortex generator (60) is composed of static parts.

4. System according to claim 3, wherein the vortex generator (60) is a fluidic oscillator.

5. System according to one of the preceding claims, wherein the vortex generator (60) is supplied by the exhaust gases (80) by means of an exhaust gas distributor (120) adapted to be connected to the outlet of the exhaust line (90) of said vehicle.

6. System according to claim 5, wherein said exhaust gas distributor (120) comprises a means of connection (122) to the exhaust line, and a tubular member (124) substantially perpendicular to the exhaust line (90) when connected to said line, the tubular member (124) allowing to distribute over at least some of the width of the vehicle the exhaust gases from the exhaust line (90) of the vehicle.

7. System according to claim 6, wherein the tubular member (124) is dimensioned to act as an exhaust pipe silencer.

8. System according to any one of the preceding claims, wherein said vortex generator (60) is oriented so as to direct the periodic air jet (70) towards the region of detachment (20).

9. System according to claim 8, wherein the region of detachment (20) generates a shear layer (50), and said vortex generator (60) is oriented so as to direct the periodic air jet (70) in or towards the shear layer (50).

10. System according to claim 9, wherein the periodic air jet (70) generates vortices (72), and said vortex generator (60) is oriented so that the vortices (72) move in a predefined direction towards the shear layer (50) so as to propagate the vortices in or towards the shear layer (50).

11. System according to any one of the preceding claims, comprising a bypass system used to evacuate the gases (80) of the exhaust line (90) without passing through the vortex generator (60).

12. System according to any one of the preceding claims, comprising at least one opening adapted to entrain the subframe air by a venturi effect.

13. System according to any one of the preceding claims, wherein the bodywork element (30) is a rear bumper.

14. Motor vehicle equipped with an aerodynamic system (10) according to any one of the preceding claims.
